# EUROPÄISCHE PATENTSCHRIFT

(11) **EP 3 339 702 B1**
(45) Veröffentlichungstag und Bekanntmachung des Hinweises auf die Patenterteilung: **06.05.2020**
(21) Anmeldenummer: 17206187.1
(22) Anmeldetag: 08.12.2017
(51) Int. Cl.: F16K 31/06

(54) **VENTILVORRICHTUNG**
VALVE DEVICE
DISPOSITIF DE SOUPAPE

(30) Priorität: 21.12.2016 DE 102016225731
(43) Veröffentlichungstag der Anmeldung: 27.06.2018
(73) Patentinhaber: Robert Bosch GmbH, 70442 Stuttgart (DE)
(72) Erfinder: Hartinger, Markus, 67100 Strasbourg (FR); Chamoue, Rachid, 70437 Stuttgart (DE); Repasi, Balint Janos, 3564 Hernadnemeti (HU); Reeb, Georg, 77815 Buehl Eisental (DE)

(56) Entgegenhaltungen:
- EP-A1- 0 928 892
- DE-A1-102008 042 801
- US-A- 3 945 399
- US-A- 4 390 158
- US-A1- 2014 070 028
- US-A1- 2016 290 299

## Beschreibung

### Stand der Technik

Es sind bereits Magnetventile bekannt, die eine Hubstange zur Betätigung eines Ventilkörpers aufweisen. Derartige Hubstangen sind beispielsweise als Edelstahlrohr ausgebildet und weisen in einem Bereich der Hubstange, der innerhalb eines durchströmten Bereichs des Ventils angeordnet ist, zu einer Entlüftung eine Querbohrung auf, über welche der Durchströmbereich durch einen Innenraum der Hubstange hindurch mit einem Innenbereich eines elektromagnetischen Antriebs verbunden ist.

Die US 2014/070028 A1 offenbart ein Druckregulierungsventil für ein Dieseleinspritzsystem.

Die US2016/290299 A1 offenbart eine Hochdruck Einspritzpumpe.

Die DE 10 2008 042801 A1 offenbart eine elektromagnetische Betätigungsvorrichtung.

Die EP 0 928 892 A1 offenbart ein Druckkompensiertes Abgasrückführventil.

Die US 4,390,158 A offenbart ein elektrisch hydraulisches Servoventil

Die US 3,945,399 A offenbart ein elektrisch moduliertes Ventil.

### Offenbarung der Erfindung

Die Erfindung geht aus von einer Ventilvorrichtung, insbesondere einer Magnetventilvorrichtung, mit zumindest einem Durchströmbereich, mit zumindest einem Ventilsitz und mit einer Betätigungseinheit, die zumindest einen Ventilkörper, zumindest ein Betätigungselement, das zu einer Übertragung einer Betätigungskraft auf den Ventilkörper vorgesehen ist, und zumindest eine außerhalb eines Fluidkontaktbereichs des Betätigungselements angeordnete erste Entlüftungsöffnung aufweist.

Es wird vorgeschlagen, dass die Betätigungseinheit zumindest eine außerhalb des Fluidkontaktbereichs des Betätigungselements angeordnete zweite Entlüftungsöffnung aufweist.

Unter einer "Ventilvorrichtung" soll insbesondere ein, insbesondere funktionstüchtiger, Bestandteil, insbesondere eine Konstruktions- und/oder Funktionskomponente, eines Ventils, insbesondere eines automatisierten und/oder teilautomatisierten Ventils, vorteilhaft eines Magnetventils, insbesondere für zumindest ein Fluid, vorteilhaft für zumindest eine Flüssigkeit, verstanden werden. Vorzugsweise weist die Ventilvorrichtung zumindest eine Aktoreinheit auf, die zu einer bedarfsweisen Erzeugung einer Betätigungskraft vorgesehen ist. Vorzugsweise ist die Aktoreinheit als ein elektromagnetischer Antrieb ausgebildet. Insbesondere umfasst die Aktoreinheit zumindest einen, insbesondere magnetischen, Anker, der vorteilhaft mit dem Betätigungselement, insbesondere unmittelbar, verbunden ist. Ferner umfasst die Aktoreinheit vorteilhaft zumindest ein bevorzugt als Induktivität ausgebildetes Antriebselement, insbesondere zumindest eine Spule, welches den Anker zumindest teilweise, besonders bevorzugt vollständig, umgibt. Vorteilhaft ist eine Lage des Antriebselements relativ zu einem Gehäuse der Ventilvorrichtung und/oder der Aktoreinheit konstant. Insbesondere ist der Anker relativ zu dem Antriebselement beweglich. Vorzugsweise ist das Antriebselement dazu vorgesehen, den Anker bedarfsweise zu bewegen, insbesondere in eine Richtung parallel zu einer Längsrichtung des Betätigungselements. Vorteilhaft ist die Aktoreinheit dazu vorgesehen, den Ventilkörper in Abhängigkeit von einem Betriebszustand zu bewegen, insbesondere von dem Ventilsitz weg oder auf diesen zu, vorzugsweise um einen geöffneten Zustand oder einen geschlossenen Zustand oder einen oder mehrere unterschiedliche teilweise geöffnete Zustände zu erzeugen. Insbesondere verschließt der Ventilkörper in dem geschlossenen Zustand eine Durchströmöffnung des Ventilsitzes und/oder öffnet diese zumindest teilweise in dem geöffneten oder teilweise geöffneten Zustand. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Insbesondere ist die erste Entlüftungsöffnung in einem Bereich der Aktoreinheit angeordnet. Vorteilhaft ist die erste Entlüftungsöffnung in einem dem Durchströmbereich abgewandten Bereich, insbesondere einem Endbereich, der Betätigungseinheit, insbesondere des Betätigungselements, angeordnet. Vorzugsweise weist das Betätigungselement die erste Entlüftungsöffnung auf. Besonders bevorzugt mündet die erste Entlüftungsöffnung in einen, insbesondere in dem geschlossenen Zustand, vom Durchströmbereich aus betrachtet hinter dem Anker angeordneten hinteren Innenbereich der Aktoreinheit. Insbesondere ist der Anker in dem geöffneten und/oder in dem teilweise geöffneten Zustand zumindest teilweise in dem hinteren Innenbereich der Aktoreinheit und/oder in dem geschlossenen Zustand außerhalb des hinteren Innenbereichs der Aktoreinheit angeordnet. Insbesondere ist die erste Entlüftungsöffnung dazu vorgesehen, einen Druckausgleich in dem hinteren Innenbereich der Aktoreinheit aufgrund einer Bewegung des Ankers zu ermöglichen. Vorteilhaft ist die erste Entlüftungsöffnung dazu vorgesehen, einen Druckausgleich und/oder einen Fluidaustausch zwischen dem hinteren Innenbereich der Aktoreinheit und dem Durchströmbereich zu ermöglichen. Insbesondere verläuft eine Öffnungsrichtung der ersten Entlüftungsöffnung zumindest im Wesentlichen parallel zu einer Haupterstreckungsrichtung des Betätigungselements. Es ist aber auch denkbar, dass eine Öffnungsrichtung der ersten Entlüftungsöffnung winklig, insbesondere rechtwinklig, zu der Haupterstreckungsrichtung des Betätigungselements verläuft. Unter einer "Öffnungsrichtung" einer Öffnung soll dabei insbesondere eine Richtung parallel zu einer Flächennormalen der Öffnung und/oder einer Haupterstreckungsebene der Öffnung verstanden werden. Unter einer "Haupterstreckungsebene" eines Objekts soll insbesondere eine Ebene verstanden werden, welche parallel zu einer größten Seitenfläche eines kleinsten gedachten Quaders ist, welcher das Objekt gerade noch vollständig umschließt, und insbesondere durch den Mittelpunkt des Quaders verläuft.

Vorteilhaft ist der Ventilkörper und/oder der Ventilsitz mit zumindest einem Dichtelement, insbesondere einem Dichtring, versehen, der bevorzugt dazu vorgesehen ist, einen dichten Sitz des Ventilkörpers in dem Ventilsitz zu ermöglichen. Eine hohe Kosteneffizienz kann erzielt werden, wenn der Ventilkörper zumindest teilweise, vorteilhaft zu wenigstens einem Großteil, insbesondere bezogen auf einen Volumenanteil und/oder auf ein Gewicht, besonders vorteilhaft vollständig aus insbesondere wenigstens eine Hartkomponente aufweisenden Kunststoff, insbesondere aus einem Kunststoffgemisch, ausgebildet ist. Unter dem Ausdruck "zu wenigstens einem Großteil" soll dabei insbesondere zu wenigstens 55 %, vorteilhaft zu wenigstens 65 %, vorzugsweise zu wenigstens 75 %, besonders bevorzugt zu wenigstens 85 % und besonders vorteilhaft zu wenigstens 95 %, insbesondere aber auch vollständig, verstanden werden.

Das Betätigungselement ist dazu vorgesehen, die Betätigungskraft von der Aktoreinheit auf den Ventilkörper zu übertragen. Insbesondere ist das Betätigungselement stangenartig ausgebildet. Vorteilhaft ist das Betätigungselement als eine Hubstange ausgebildet. Bevorzugt umfasst die Ventilvorrichtung zumindest ein Strömungsgehäuse, welches den Durchströmbereich definiert. Insbesondere weist das Strömungsgehäuse zumindest einen Zulauf und zumindest einen Ablauf auf. Vorteilhaft ist der Ventilsitz zwischen dem Zulauf und dem Ablauf angeordnet. Besonders vorteilhaft ist der Ventilkörper von dem Zulauf aus betrachtet hinter dem Ventilsitz angeordnet. Vorzugsweise ist der Durchströmbereich ein von einem Fluid in einem geöffneten oder teilweise geöffneten Zustand durchströmter Bereich des Strömungsgehäuses.

Insbesondere beinhaltet der Fluidkontaktbereich zumindest einen Abschnitt des Betätigungselements, der in zumindest einem Betriebszustand mit einem Fluid, insbesondere mit einem durch den Durchströmbereich hindurch strömenden Fluid, in Kontakt steht. Insbesondere umfasst der Fluidkontaktbereich, vorteilhaft genau und/oder ausschließlich, einen Abschnitt des Betätigungselements, der innerhalb des Durchströmbereichs und außerhalb des Ventilkörpers angeordnet ist. Erfindungsgemäß ist die zweite Entlüftungsöffnung außerhalb des Abschnitts des Betätigungselements, der innerhalb des Durchströmbereichs und außerhalb des Ventilkörpers angeordnet ist, angeordnet. Vorteilhaft ist die zweite Entlüftungsöffnung mit dem Durchströmbereich verbunden und/oder in dem Durchströmbereich angeordnet.

Durch die erfindungsgemäße Ausgestaltung der Magnetventilvorrichtung können vorteilhafte Eigenschaften hinsichtlich einer kostengünstigen Herstellung erzielt werden. Ferner kann eine Montierbarkeit vereinfacht werden. Außerdem können ein Ventilkörper und ein Betätigungselement schnell und einfach verbunden werden, insbesondere ohne die Notwendigkeit eines präzisen Einstellens einer Drehposition. Des Weiteren kann in einem Bereich eines Dichtkegels eine gezielte Entlüftung ermöglicht werden. Ferner kann eine hohe Robustheit und/oder eine geringe Anfälligkeit für Verschmutzungen, insbesondere durch Partikel und/oder Sand, erzielt werden. Ferner kann ein Spiel zwischen einem Magnetanker und einer Dichthülse vorteilhaft reduziert werden.

Erfindungsgemäß weist der Ventilkörper die zweite Entlüftungsöffnung auf. Insbesondere weist der Ventilkörper zumindest einen Entlüftungskanal auf, der einen Innenraum des Ventilkörpers mit dem Durchströmbereich, insbesondere durch die zweite Entlüftungsöffnung hindurch, verbindet. Hierdurch kann eine Entlüftung insbesondere aufgrund einer erhöhten Sogwirkung in einem Bereich des Ventilkörpers verbessert werden.

In einer Ausgestaltung der Erfindung wird vorgeschlagen, dass das Betätigungselement eine dritte Entlüftungsöffnung aufweist. Vorzugsweise weist das Betätigungselement zumindest eine Entlüftungsdurchführung und/oder zumindest einen Entlüftungskanal und/oder zumindest eine Entlüftungsbohrung auf, welche/welcher insbesondere die dritte Entlüftungsbohrung ausbildet. Vorteilhaft mündet die dritte Entlüftungsöffnung in diesem Fall in einen vorderen Innenbereich der Aktoreinheit, der außerhalb des Durchströmbereichs und/oder insbesondere in dem geöffneten Zustand vom Durchströmbereich aus betrachtet vor dem Anker, insbesondere zwischen einem Ankersitz des Ankers und dem Anker, angeordnet ist. Insbesondere ist in dem geöffneten und/oder in dem teilweise geöffneten Zustand der Anker von dem Ankersitz beabstandet angeordnet und/oder liegt in dem geschlossenen Zustand an diesem an. Insbesondere ist die dritte Entlüftungsöffnung in diesem Fall dazu vorgesehen, einen Druckausgleich und/oder einen Fluidaustausch zwischen dem hinteren Innenbereich der Aktoreinheit und dem vorderen Innenbereich der Aktoreinheit zu ermöglichen, insbesondere durch die erste Entlüftungsöffnung und die dritte Entlüftungsöffnung hindurch.

Die erfindungsgemäße Ventilvorrichtung soll hierbei nicht auf die oben beschriebene Anwendung und Ausführungsform beschränkt sein. Insbesondere kann die erfindungsgemäße Ventilvorrichtung zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

In einer besonders vorteilhaften Ausgestaltung der Erfindung wird vorgeschlagen, dass die Betätigungseinheit zumindest eine außerhalb des Fluidkontaktbereichs des Betätigungselements angeordnete dritte Entlüftungsöffnung aufweist. Insbesondere entspricht in diesem Fall die zweite Entlüftungsöffnung der beschriebenen Entlüftungsöffnung des Ventilkörpers und/oder die dritte Entlüftungsöffnung der beschriebenen Entlüftungsöffnung des Betätigungselements. Hierdurch kann vorteilhaft eine Entlüftung sowie ein Druckausgleich und/oder ein Fluidaustausch bei einem Schalten eines Magnetventils ermöglicht werden.

Eine einfache Bauweise und/oder eine hohe Bauteileeffizienz kann erzielt werden, wenn die Betätigungseinheit zumindest einen Kanal aufweist, der zumindest zwei der Entlüftungsöffnungen miteinander verbindet. Vorteilhaft erstreckt sich der Kanal zumindest im Wesentlichen parallel oder parallel zu einer Haupterstreckungsrichtung des Betätigungselements. Besonders vorteilhaft verbindet der Kanal die erste Entlüftungsöffnung mit der Entlüftungsöffnung des Ventilkörpers und/oder mit der dritten Entlüftungsöffnung des Betätigungselements. Insbesondere verbindet der Kanal die erste Entlüftungsöffnung, die zweite Entlüftungsöffnung und die dritte Entlüftungsöffnung. Vorzugsweise ist die zweite Entlüftungsöffnung über den Entlüftungskanal des Ventilkörpers und den Innenraum des Ventilkörpers mit der dritten Entlüftungsöffnung und/oder mit der ersten Entlüftungsöffnung verbunden. Vorzugsweise weist der Kanal zumindest eine erste Eintrittsöffnung auf, die vorteilhaft die erste Entlüftungsöffnung ist. Besonders bevorzugt weist der Kanal zumindest eine zweite Eintrittsöffnung auf, die vorteilhaft der ersten Eintrittsöffnung gegenüberliegend angeordnet ist und besonders vorteilhaft in den Innenraum des Ventilkörpers mündet. Es ist aber auch denkbar, dass die zweite Eintrittsöffnung des Kanals der dritten Entlüftungsöffnung des Betätigungselements entspricht. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Haupterstreckungsrichtung" eines Objekts soll dabei insbesondere eine Richtung verstanden werden, welche parallel zu einer längsten Kante eines kleinsten gedachten Quaders verläuft, welcher das Objekt gerade noch vollständig umschließt.

Eine hohe Belastbarkeit und/oder eine kostengünstige und/oder bauteileeffiziente Bauweise kann erzielt werden, wenn das Betätigungselement zumindest im Wesentlichen rohrförmig oder rohrförmig ausgebildet ist. Unter einem "zumindest im Wesentlichen rohrförmigen Objekt" soll in diesem Zusammenhang insbesondere ein Objekt mit zumindest einem länglichen und/oder kanalförmigen Innenraum und wenigstens einer vorderen und/oder wenigstens einer hinteren Eintrittsöffnung verstanden werden, wobei der Innenraum über weitere Öffnungen, Schlitze, Spalte, Bohrungen, Kanäle, insbesondere mit senkrecht zu einer Längsrichtung des Objekts und/oder des Innenraums angeordneten Durchtrittsrichtungen, mit einer Umgebung verbunden oder verbindbar sein kann, beispielsweise ein Rohr und/oder ein Stab mit Längsbohrung und/oder ein Schlauch, insbesondere auch mit Querbohrungen und/oder seitlichen Löchern und/oder Schlitzen oder dergleichen. Insbesondere ist der Kanal als eine Längsbohrung des Betätigungselements ausgebildet. Vorzugsweise ist das Betätigungselement als ein Rohr ausgebildet.

Eine kostengünstige Herstellbarkeit und/oder eine Flexibilität hinsichtlich realisierbarer Geometrien kann erzielt werden, wenn das Betätigungselement zumindest teilweise, vorteilhaft zu wenigstens einem Großteil, insbesondere bezogen auf einen Volumenanteil und/oder auf ein Gewicht, besonders vorteilhaft vollständig aus insbesondere wenigstens eine Hartkomponente aufweisenden Kunststoff, insbesondere aus einem Kunststoffgemisch, ausgebildet ist.

Eine einfache Montage und/oder vorteilhafte Eigenschaften hinsichtlich einer Ausrichtung eines Betätigungselements relativ zu einem Ventilkörper können erzielt werden, wenn das Betätigungselement stoffschlüssig und/oder formschlüssig mit dem Ventilkörper verbunden ist. Erfindungsgemäß bildet der Ventilkörper zumindest einen Aufnahmebereich für das Betätigungselement aus, in welchen das Betätigungselement vorteilhaft eingeschoben und/oder eingesteckt ist und/oder welcher mit dem Innenraum des Ventilkörpers verbunden ist und/oder diesen beinhaltet. Insbesondere in dem Fall, dass das Betätigungselement und der Ventilkörper zumindest teilweise aus Kunststoff ausgebildet sind, ist denkbar, dass das Betätigungselement und der Ventilkörper insbesondere mittels Ultraschallschweißens verschweißt sind. Es ist auch denkbar, dass das Betätigungselement und der Ventilkörper miteinander verklebt sind.

Eine effiziente Entlüftung kann ermöglicht werden, wenn eine Öffnungsrichtung zumindest einer der Entlüftungsöffnungen, insbesondere der zweiten Entlüftungsöffnung und/oder der dritten Entlüftungsöffnung, winklig, insbesondere zumindest im Wesentlichen senkrecht zu einer Längsrichtung des Betätigungselements ausgerichtet ist. Unter "zumindest im Wesentlichen senkrecht" soll hier insbesondere eine Ausrichtung einer Richtung relativ zu einer Bezugsrichtung, insbesondere in einer Bezugsebene, verstanden werden, wobei die Richtung und die Bezugsrichtung einen Winkel einschließen, der insbesondere weniger als 8°, vorteilhaft weniger als 5° und besonders vorteilhaft weniger als 2° von einem rechten Winkel abweicht.

Vorteilhafte Eigenschaften hinsichtlich einer kostengünstigen Herstellung und/oder einer wirksamen Entlüftung können mit einem Ventil, insbesondere mit einem Magnetventil, mit zumindest einer erfindungsgemäßen Ventilvorrichtung erzielt werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Ventil mit einer Ventilvorrichtung in einer perspektivischen Darstellung,
- Fig. 2: die Ventilvorrichtung in einem geschlossenen Zustand einer schematischen Schnittdarstellung,
- Fig. 3: einen Ausschnitt der Ventilvorrichtung in dem geschlossenen Zustand in einer weiteren schematischen Schnittdarstellung,
- Fig. 4: einen Ausschnitt einer Aktoreinheit der Ventilvorrichtung in einem geöffneten Zustand in einer schematischen Schnittdarstellung,
- Fig. 5: die Ventilvorrichtung in einem ersten vormontierten Zustand in einer schematischen Schnittdarstellung,
- Fig. 6: die Ventilvorrichtung in einem zweiten vormontierten Zustand in einer schematischen Schnittdarstellung,
- Fig. 7: die Ventilvorrichtung in einem dritten vormontierten Zustand in einer schematischen Schnittdarstellung,
- Fig. 8: die Ventilvorrichtung in einem vierten vormontierten Zustand in einer schematischen Schnittdarstellung und
- Fig. 9: ein Satz aus einem ersten Ventil und einem zweiten Ventil in einer schematischen Darstellung.

### Beschreibung des Ausführungsbeispiels

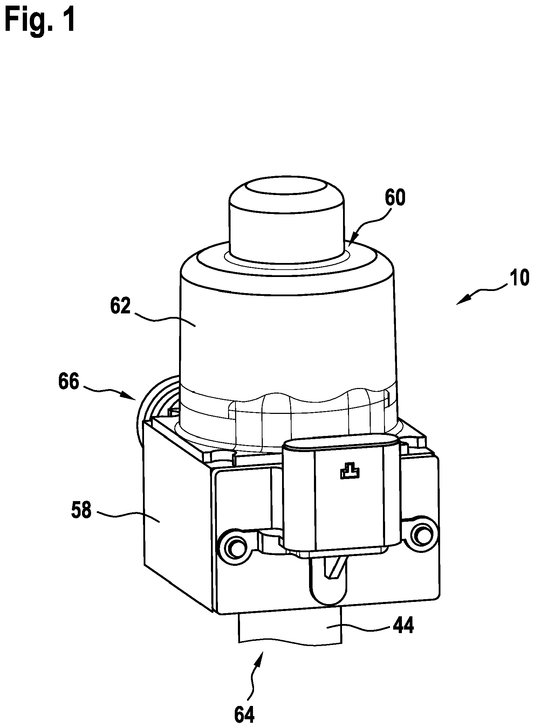

Die Figur 1 zeigt ein Ventil 58 mit einer Ventilvorrichtung 10 in einer perspektivischen Darstellung. Das Ventil 58 ist als ein Magnetventil ausgebildet. Die Ventilvorrichtung 10 ist als eine Magnetventilvorrichtung ausgebildet. Die Ventilvorrichtung 10 umfasst im vorliegenden Fall ein Strömungsgehäuse 44. Ferner umfasst die Ventilvorrichtung 10 eine Aktoreinheit 60 mit einem Gehäuse 62.

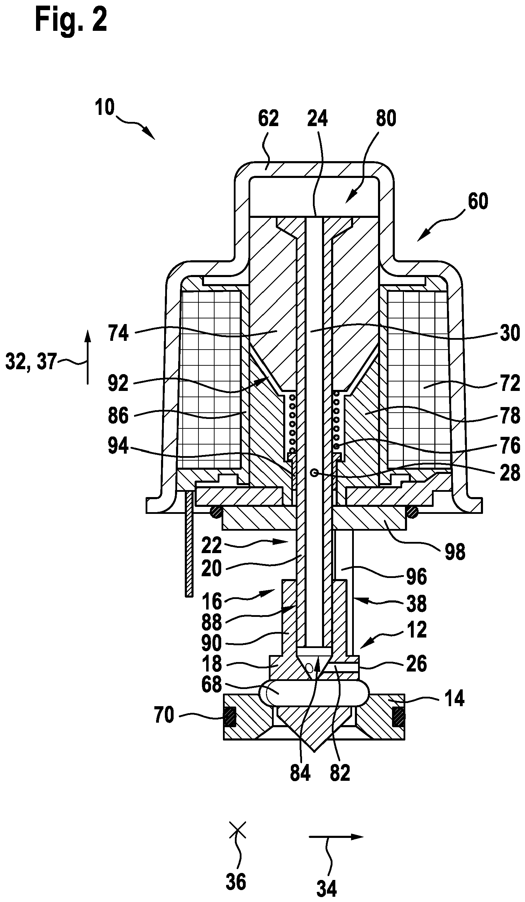

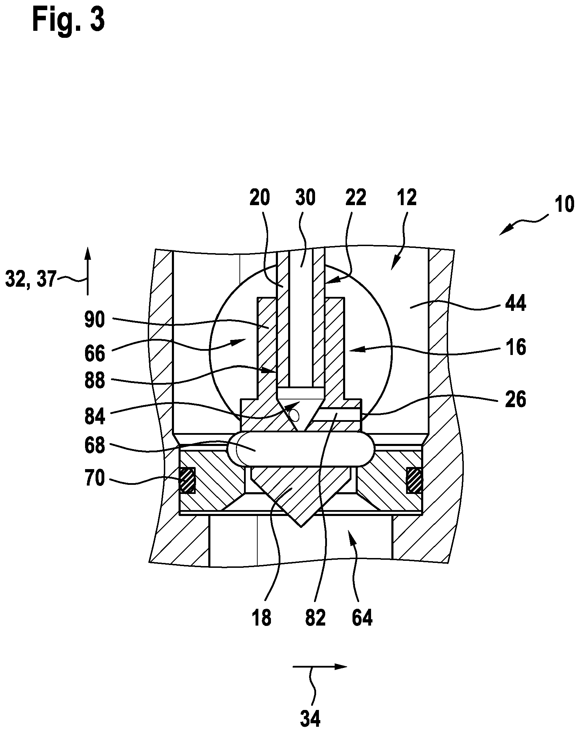

Die Figur 2 zeigt die Ventilvorrichtung 10 in einem geschlossenen Zustand in einer schematischen Schnittdarstellung. Das Strömungsgehäuse 44 ist aus Gründen einer Übersichtlichkeit in der Figur 2 nicht dargestellt. Die Figur 3 zeigt einen Ausschnitt der Ventilvorrichtung 10 in dem geschlossenen Zustand in einer schematischen Schnittdarstellung. Die Ventilvorrichtung 10 weist zumindest einen Durchströmbereich 12 auf. Der Durchströmbereich 12 ist zu einer Durchströmung mit einem Fluid vorgesehen. Das Strömungsgehäuse 44 definiert den Durchströmbereich 12. Des Weiteren weist die Ventilvorrichtung 10 zumindest einen Ventilsitz 14 auf. Ferner weist die Ventilvorrichtung 10 eine Betätigungseinheit 16 auf, die zumindest einen Ventilkörper 18 sowie zumindest ein Betätigungselement 20, das zu einer Übertragung einer Betätigungskraft auf den Ventilkörper 18 vorgesehen ist, umfasst. Der Ventilkörper 18 ist im vorliegenden Fall als ein Dichtkegel ausgebildet. Des Weiteren ist im vorliegenden Fall das Betätigungselement 20 als eine Hubstange ausgebildet. Ferner weist die Betätigungseinheit 16 zumindest eine außerhalb eines Fluidkontaktbereichs 22 des Betätigungselements 20 angeordnete erste Entlüftungsöffnung 24 auf. Außerdem weist die Betätigungseinheit 16 zumindest eine außerhalb des Fluidkontaktbereichs 22 des Betätigungselements 20 angeordnete zweite Entlüftungsöffnung 26 auf.

Darüber hinaus weist die Betätigungseinheit 16 im vorliegenden Fall eine außerhalb des Fluidkontaktbereichs 22 des Betätigungselements 20 angeordnete dritte Entlüftungsöffnung 28 auf. Im vorliegenden Fall weist der Ventilkörper 18 die zweite Entlüftungsöffnung 26 auf. Ferner weist im vorliegenden Fall das Betätigungselement 20 die dritte Entlüftungsöffnung 28 auf. Es ist aber denkbar, dass eine Betätigungseinheit als zweite Entlüftungsöffnung in analoger Weise zu dem hierin beschriebenen lediglich eine Entlüftungsöffnung eines Ventilkörpers oder eine Entlüftungsöffnung eines Betätigungselements aufweist.

Die Ventilvorrichtung 10 weist einen Zulauf 64 und einen Ablauf 66 auf. Der Ventilsitz 14 ist vom Zulauf 64 her betrachtet vor dem Ventilkörper 18 angeordnet. Der Ablauf 66 ist vom Zulauf 64 her betrachtet hinter dem Ventilsitz 14 angeordnet. In dem geschlossenen Zustand sitzt der Ventilkörper 18 auf dem Ventilsitz 14 auf. Im vorliegenden Fall ist der Ventilkörper 18 mit einem Dichtelement 68 versehen, um vorteilhaft ein dichtes Schließen zu ermöglichen. Das Dichtelement 68 ist als ein Dichtring ausgebildet. In den Figuren 2 und 3 ist das Dichtelement 68 nicht geschnitten dargestellt. Ferner weist der Ventilsitz 14 ein weiteres Dichtelement 70 auf. Das weitere Dichtelement 70 ist dazu vorgesehen, eine dichte Verbindung zu dem Strömungsgehäuse 44 herzustellen. In einem geöffneten und/oder in einem teilweise geöffneten Zustand ist der Ventilkörper 18 von dem Ventilsitz 14 angehoben angeordnet. Ein Fluid kann dann vom Zulauf 64 zum Ablauf 66 strömen, insbesondere durch einen zwischen dem Ventilkörper 18 beziehungsweise dem Dichtelement 68 und dem Ventilsitz 14, sich bei einem Öffnen bildenden Spalt.

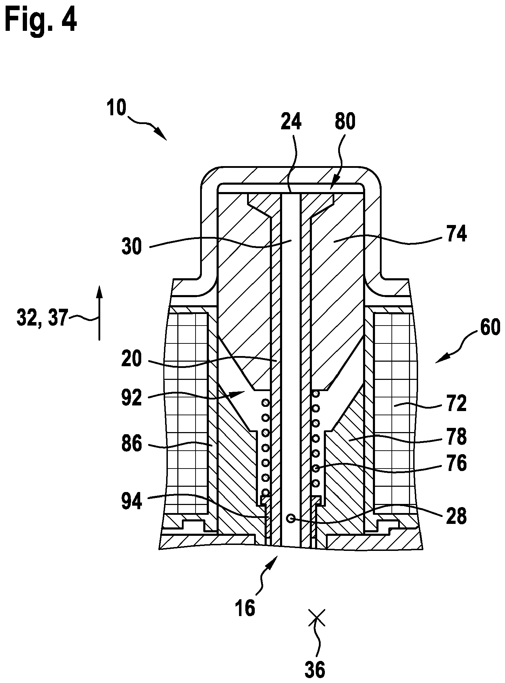

Die Aktoreinheit 60 umfasst ein Antriebselement 72. Das Antriebselement 72 ist als eine Spule ausgebildet. Ferner umfasst die Aktoreinheit 60 einen Anker 74. Das Betätigungselement 20 ist mit dem Anker 74 verbunden. Im vorliegenden Fall ist das Betätigungselement 20 formschlüssig mit dem Anker 74 verbunden, sodass vorteilhaft eine bei einer Bewegung des Ankers 74 entstehende Zugkraft und/oder Hubkraft auf das Betätigungselement 20 und den Ventilkörper 18 als Betätigungskraft übertragen werden kann. Der Anker 74 ist im vorliegenden Fall als ein Magnetanker ausgebildet. Die Aktoreinheit 60 ist zu einer Erzeugung der Betätigungskraft vorgesehen. Der Anker 74 ist entlang einer Längsrichtung 37 des Betätigungselements 20 beweglich gelagert. Die Aktoreinheit 60 umfasst eine Dichthülse 86 für den Anker 74. Der Anker 74 ist in der Dichthülse 86 beweglich gelagert. Die Längsrichtung 37 des Betätigungselements 20 verläuft parallel zu einer Haupterstreckungsrichtung des Betätigungselements 20. Die Figur 4 zeigt ferner einen Ausschnitt der Aktoreinheit 60 in dem geöffneten Zustand in einer schematischen Schnittdarstellung. Zu einem Öffnen und/oder einem teilweisen Öffnen wird der Anker 74 insbesondere mittels geeigneter Ansteuerung des Antriebselements 72 in die Längsrichtung 37 des Betätigungselements 20 bewegt. Hierdurch wird die Betätigungskraft erzeugt. Die Aktoreinheit 60 weist ein Rückstellelement 76 auf, welches einer Bewegung des Ankers 74 entgegenwirkt. In einem unbetätigten Zustand drückt das Rückstellelement 76 den Anker 74 gegen einen Ankersitz 78. Bei einer Auslenkung des Ankers 74, beispielsweise bei einem Öffnen, wird das Rückstellelement 76 gespannt, insbesondere gedehnt. Das Rückstellelement 76 ist im vorliegenden Fall als ein Federelement ausgebildet.

Die erste Entlüftungsöffnung 24 mündet in einen hinteren Innenbereich 80 der Aktoreinheit 60. Der hintere Innenbereich 80 der Aktoreinheit 60 ist in dem geschlossenen Zustand vom Durchströmbereich 12 aus betrachtet hinter dem Anker 74 angeordnet. Der hintere Innenbereich 80 der Aktoreinheit 60 ist von dem Gehäuse 62 der Aktoreinheit 60 zumindest teilweise begrenzt. Eine Öffnungsrichtung 32 der ersten Entlüftungsöffnung 24 ist parallel zu der Längsrichtung 37 des Betätigungselements 20 ausgerichtet. In dem geschlossenen Zustand ist der Anker 74 außerhalb des hinteren Innenbereichs 80 der Aktoreinheit 60 angeordnet. In dem geöffneten Zustand ist der Anker 74 teilweise in dem hinteren Innenbereich 80 der Aktoreinheit 60 angeordnet. Bei einer Bewegung des Ankers 74 in den hinteren Innenbereich 80 hinein, beispielsweise bei einem Öffnen, wird ein freies Volumen zwischen dem Anker 74 und dem Gehäuse 62 der Aktoreinheit 60 verkleinert.

Die zweite Entlüftungsöffnung 26 weist eine Öffnungsrichtung 34 auf, die winklig, im vorliegenden Fall senkrecht, zu der Längsrichtung 37 des Betätigungselements 20 ausgerichtet ist. Der Ventilkörper 18 weist einen Entlüftungskanal 82 auf, der die zweite Entlüftungsöffnung 26 ausbildet. Der Entlüftungskanal 82 ist als eine Querbohrung ausgebildet. Der Entlüftungskanal 82 erstreckt sich parallel zu der Öffnungsrichtung 34 der zweiten Entlüftungsöffnung 26. Der Entlüftungskanal 82 ist mit einem Innenraum 84 des Ventilkörpers 18 verbunden. Der Innenraum 84 des Ventilkörpers 18 ist kegelförmig ausgebildet.

Die dritte Entlüftungsöffnung 28 weist eine Öffnungsrichtung 36 auf, die winklig, im vorliegenden Fall senkrecht, zu der Längsrichtung 37 des Betätigungselements 20 ausgerichtet ist. Im vorliegenden Fall ist die Öffnungsrichtung 36 der dritten Entlüftungsöffnung 28 senkrecht zu der Öffnungsrichtung 34 der zweiten Entlüftungsöffnung 26 angeordnet. Es ist aber auch eine parallele Anordnung denkbar. Die dritte Entlüftungsöffnung 28 mündet in dem geöffneten Zustand in einem vorderen Innenbereich 92 der Aktoreinheit 60. In dem geschlossenen Zustand mündet die dritte Entlüftungsöffnung 28 in einer Führungshülse 94 der Aktoreinheit 60, die zu einer Führung des Betätigungselements 20 vorgesehen ist. Der vordere Innenbereich 92 der Aktoreinheit 60 ist in dem geöffneten Zustand vom Durchströmbereich 12 aus betrachtet vor dem Anker 74 angeordnet. Der vordere Innenbereich 92 der Aktoreinheit 60 ist vom Durchströmbereich 12 aus betrachtet hinter dem Ankersitz 78 und insbesondere vor dem hinteren Innenbereich 80 der Aktoreinheit 60 angeordnet. Der hintere Innenbereich 80 der Aktoreinheit 60 ist vom Durchströmbereich 12 aus betrachtet hinter dem Ankersitz 78 und insbesondere hinter dem vorderen Innenbereich 92 der Aktoreinheit 60 angeordnet. In dem geschlossenen Zustand ist der Anker 74 zumindest teilweise in dem vorderen Innenbereich 92 der Aktoreinheit 60 angeordnet. Bei einem Schließen wird der Anker 74 teilweise in den vorderen Innenbereich 92 der Aktoreinheit 60 bewegt. Ein Volumen zwischen dem Ankersitz 78 und dem Anker 74 wird dabei verkleinert.

Das Betätigungselement 20 ist in einen Aufnahmebereich 88 des Ventilkörpers 18 eingeschoben. Der Aufnahmebereich 88 ist mit dem Innenraum 84 des Ventilkörpers 18 verbunden. Der Ventilkörper 18 weist ein Mantelelement 90 auf, welches den Aufnahmebereich 88 und/oder den Innenraum 84 des Ventilkörpers 18 zumindest teilweise umgibt und/oder definiert. Das Betätigungselement 20 ist zumindest teilweise aus Kunststoff ausgebildet. Der Ventilkörper 18 ist zumindest teilweise aus Kunststoff ausgebildet. Im vorliegenden Fall sind das Betätigungselement 20 und der Ventilkörper 18 aus Kunststoff ausgebildet. Das Betätigungselement 20 ist stoffschlüssig mit dem Ventilkörper 18 verbunden. Im vorliegenden Fall ist das Betätigungselement 20 mittels Ultraschallschweißens mit dem Ventilkörper 18 verschweißt. Alternativ oder zusätzlich ist auch eine formschlüssige Verbindung denkbar.

Die Betätigungseinheit 16 weist zumindest einen Kanal 30 auf, der zumindest zwei der Entlüftungsöffnungen 24, 26, 28 miteinander verbindet. Im vorliegenden Fall verbindet der Kanal 30 die erste Entlüftungsöffnung 24, die zweite Entlüftungsöffnung 26 und die dritte Entlüftungsöffnung 28 miteinander. Die zweite Entlüftungsöffnung 26 ist über den Entlüftungskanal 82 und den Innenraum 84 des Ventilkörpers 18 mit dem Kanal 30 verbunden. Im vorliegenden Fall weist das Betätigungselement 20 den Kanal 30 auf. Der Kanal 30 ist als eine Längsbohrung des Betätigungselements 20 ausgebildet. Das Betätigungselement 20 ist zumindest im Wesentlichen rohrförmig ausgebildet. Der Kanal 30 verbindet in dem geschlossenen Zustand den Durchströmbereich 12 mit dem hinteren Innenbereich 80 der Aktoreinheit 60. In dem geöffneten Zustand verbindet der Kanal 30 den Durchströmbereich 12 mit dem vorderen Innenbereich 92 der Aktoreinheit 60. Ferner verbindet der Kanal 30 insbesondere bei einem Öffnen und Schließen den vorderen Innenbereich 92 der Aktoreinheit 60 mit dem hinteren Innenbereich 80 der Aktoreinheit 60. Es kann insbesondere ein Volumenaustausch durch den Kanal 30 erfolgen, vorteilhaft bei einem Schaltvorgang. Insbesondere kann ein Ansaugen von Partikeln und/oder von Sand reduziert werden.

Die Ventilvorrichtung 10 weist eine Abstandseinheit 38 auf. Die Abstandseinheit 38 definiert einen Abstand zwischen dem Ankersitz 78 und dem Ventilsitz 14. Die Abstandseinheit 38 weist den Ventilsitz 14 auf. Die Abstandseinheit 38 weist ein mit dem Ventilsitz 14 verbundenes Abstandselement 96 auf. Ferner weist die Abstandseinheit 38 ein mit dem Abstandselement 96 verbundenes Anschlagselement 98 auf. Das Anschlagselement 98 liegt in einem montierten Zustand an der Aktoreinheit 60 an. Im vorliegenden Fall ist das Anschlagselement 98 einteilig mit dem Abstandselement 96 verbunden. Ferner ist im vorliegenden Fall das Abstandselement 96 einteilig mit dem Ventilsitz 14 verbunden. Das Anschlagselement 96 ist im vorliegenden Fall ringförmig ausgebildet. Die Abstandseinheit 38 ist zumindest teilweise aus Kunststoff ausgebildet. Inbesondere ist der Ventilsitz 14 und/oder das Anschlagselement 98 und/oder das Abstandselement 96 aus Kunststoff ausgebildet.

Im Folgenden wird ein Verfahren zur Herstellung der Ventilvorrichtung 10 beschrieben. Bei dem Verfahren wird eine Anordnung des Betätigungselements 20 relativ zu dem Ventilkörper 18 eingestellt. Im vorliegenden Fall wird eine Position des Betätigungselements 20 relativ zu dem Ventilkörper 18 parallel zu der Längsrichtung 37 des Betätigungselements 20 eingestellt. In den folgenden Figuren sind aus Gründen einer Übersichtlichkeit einige Einheiten, Elemente, Bereiche, Komponenten und dergleichen nicht mit Bezugszeichen versehen. Bei dem Verfahren wird eine vorgefertigte Baugruppe 40, welche zumindest das Betätigungselement 20 und die Aktoreinheit 60 umfasst, mit einer weiteren Baugruppe 42, welche zumindest den Ventilkörper 18 und die Abstandseinheit 38, im vorliegenden Fall mit dem Ventilsitz 14, umfasst, ergänzt. Die vorgefertigte Baugruppe 40 kann dabei unabhängig von dem Strömungsgehäuse 44 gefertigt und insbesondere für unterschiedliche Ventile verwendet werden.

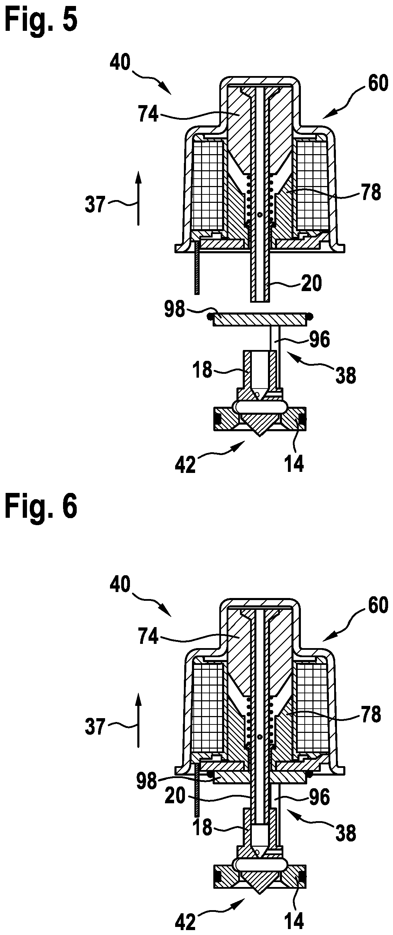

Die Figur 5 zeigt die Ventilvorrichtung 10 in einem ersten vormontierten Zustand in einer schematischen Schnittdarstellung. In dem ersten vormontierten Zustand werden die vorgefertigte Baugruppe 40 und die weitere Baugruppe 42 relativ zueinander ausgerichtet. Anschließend wird das Betätigungselement 20 zumindest abschnittsweise in den Aufnahmebereich 88 des Ventilkörpers 18, eingeschoben. Beispielsweise wird die weitere Baugruppe 42 auf die vorgefertigte Baugruppe 40 zugeschoben.

Die Figur 6 zeigt die Ventilvorrichtung 10 in einem zweiten vormontierten Zustand in einer schematischen Schnittdarstellung. In dem zweiten vormontierten Zustand ist das Betätigungselement 20 teilweise in den Ventilkörper 18 eingeschoben. Die Abstandseinheit 38 wird vorgeschoben, bis diese an der Aktoreinheit 60 anliegt, insbesondere mit dem Anschlagselement 98. In dem zweiten vormontierten Zustand ist ein Abstand zwischen dem Ventilsitz 14 und der Aktoreinheit 60, insbesondere zwischen dem Ventilsitz 14 und dem Ankersitz 78, durch die Abstandseinheit 38 definiert. Insbesondere ist der Anker 74 in dem zweiten vormontierten Zustand, in dem geöffneten Zustand oder in einem teilweise geöffneten Zustand entsprechend angeordnet.

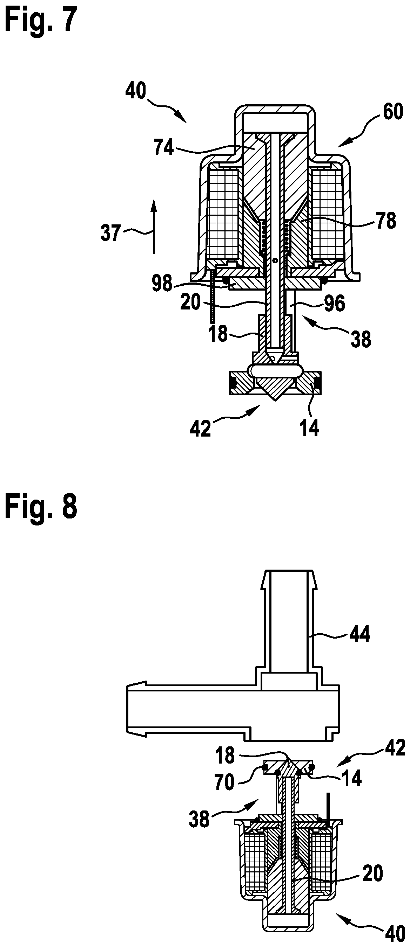

Die Figur 7 zeigt die Ventilvorrichtung 10 in einem dritten vormontierten Zustand in einer schematischen Schnittdarstellung. Insbesondere ausgehend von dem zweiten vormontierten Zustand wird das Betätigungselement 20 relativ zu dem Ventilkörper 18 mittels der Abstandseinheit 38 eingestellt. Das Betätigungselement 20 wird bis zu einer endgültigen Befestigungsposition relativ zu dem Ventilkörper 18 vorgeschoben, während das Anschlagselement 98 an der Aktoreinheit 60 anliegt. Der Ventilkörper 18 ist in dem Ventilsitz 14 angeordnet, während die Anordnung des Betätigungselements 20 relativ zu dem Ventilkörper 18 eingestellt wird. Ein Einstellen der Anordnung des Betätigungselements 20 relativ zu dem Ventilkörper 18 erfolgt mittels eines Vorschiebens des Ankers 74 in den Ankersitz 78. Aufgrund der gleichzeitigen Anordnung des Ventilkörpers 18 in dem Ventilsitz 14 kann auf diese Weise eine Abstandseinstellung für den geschlossenen Zustand erfolgen. Hierbei können Toleranzen und/oder unterschiedliche Längen des Abstandselements 96 ausgeglichen werden, insbesondere indem das Betätigungselement 20 soweit vorgeschoben wird, bis der Anker 74 in dem Ankersitz 78 angeordnet ist, während der Ventilkörper 18, dem geschlossenen Zustand entsprechend, in dem Ventilsitz 14 angeordnet ist.

Ferner werden das Betätigungselement 20 und der Ventilkörper 18 stoffschlüssig miteinander verbunden. Wie erwähnt ist alternativ oder zusätzlich denkbar, dass das Betätigungselement 20 und der Ventilkörper 18 formschlüssig miteinander verbunden werden. Insbesondere erfolgt eine Verbindung des Betätigungselements 20 und des Ventilkörpers 18 nach dem Einstellen der Anordnung des Betätigungselements 20 relativ zu dem Ventilkörper 18. Es wird somit insbesondere eine Restabstandseinstellung ohne ein Einstellen einer Position des Betätigungselements 20 relativ zu dem Anker 74 ermöglicht. Im vorliegenden Fall werden das Betätigungselement 20 und der Ventilkörper 18 mittels Ultraschallschweißens miteinander verbunden. Insbesondere wird dabei das Mantelelement 90 des Ventilkörpers 18 mit dem Betätigungselement 20 verbunden.

Die Figur 8 zeigt die Ventilvorrichtung 10 in einem vierten vormontierten Zustand in einer schematischen Schnittdarstellung. Die vorgefertigte Baugruppe 40 und die weitere Baugruppe 42 sind insbesondere nach der Verbindung des Ventilkörpers 18 mit dem Betätigungselement 20 miteinander verbunden. Die Abstandseinheit 38, der Ventilkörper 18 und das Betätigungselement 20 werden in einem vormontierten Zustand gemeinsam zumindest teilweise in das Strömungsgehäuse 44 der Ventilvorrichtung 10 eingeschoben. Bei dem Einschieben wird der Ventilsitz 14 in dem Strömungsgehäuse 44 angeordnet. Die Abstandseinheit 38 bewerkstelligt dabei eine korrekte Positionierung des Ventilsitzes 14 relativ zu der Betätigungseinheit 16. Der Ventilsitz 14 wird mittels des weiteren Dichtelements 70 dicht mit dem Strömungsgehäuse 44 verbunden.

Fertigungstoleranzen können vorteilhaft in einfacher Weise ausgeglichen werden, insbesondere da eine Restabstandseinstellung mittels der Abstandseinheit 38 und unabhängig von dem Strömungsgehäuse 44 erfolgt.

Aufgrund des Einstellens der Anordnung des Betätigungselements 20 relativ zu dem Ventilkörper 18 außerhalb des Strömungsgehäuses 44 und/oder unabhängig von dessen Geometrie, kann vorteilhaft die vorgefertigte Baugruppe 40 mit unterschiedlichen Strömungsgehäusen und/oder Abstandseinheiten und/oder Ventilkörpern kombiniert werden, wodurch insbesondere eine hohe Kosteneffizient erzielt werden kann.

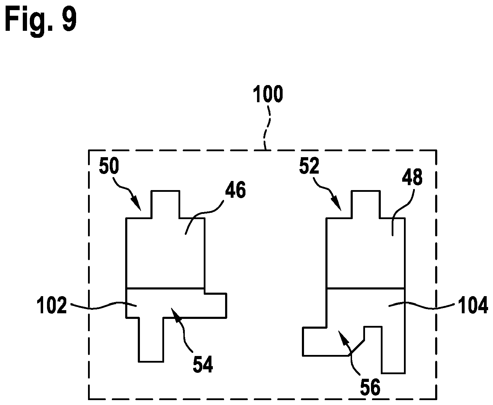

Die Figur 9 zeigt einen Satz 100 aus einem ersten Ventil 46 und einem zweiten Ventil 48 in einer schematischen Darstellung. Das erste Ventil 46 und das zweite Ventil 48 sind jeweils als erfindungsgemäßes Ventil mit einer erfindungsgemäßen, insbesondere analog zu der gezeigten Ventilvorrichtung 10 ausgebildeten, Ventilvorrichtung ausgebildet. Das erste Ventil 46 und das zweite Ventil 48 weisen jeweils eine erste Baugruppe 50, 52 auf, die zumindest ein nicht gezeigtes Betätigungselement umfasst. Im vorliegenden Fall entsprechen die ersten Baugruppen 50, 52 der vorgefertigten Baugruppe 42. Die ersten Baugruppen 50, 52 sind zumindest im Wesentlichen identisch ausgebildet. Insbesondere sind die ersten Baugruppen 50, 52 baugleich. Das erste Ventil 46 und das zweite Ventil 48 weisen jeweils eine zweite Baugruppe 54, 56 auf, die zumindest einen nicht gezeigten Ventilsitz und zumindest einen nicht gezeigten Ventilkörper aufweist. Im vorliegenden Fall sind die zweiten Baugruppen 54, 56, der weiteren Baugruppe 42 entsprechend, jeweils eine nicht gezeigte Abstandseinheit umfassend ausgebildet. Die zweiten Baugruppen 54, 56 sind unterschiedlich ausgebildet. Beispielsweise können die zweiten Baugruppen 54, 56 unterschiedliche Abstandseinheiten und/oder Ventilsitze und/oder Ventilkörper aufweisen. Insbesondere weisen das erste Ventil 46 und das zweite Ventil 48 unterschiedliche Strömungsgehäuse 102, 104 auf.

Gemäß einem weiteren Aspekt kann der Ventilkörper 18 auch eine im Wesentlichen umlaufende Nut zur Aufnahme des Dichtelements 68 aufweisen. Die Figur 3 zeigt den Ventilkörper 18 mit montiertem Dichtelement 68. Das Dichtelement 68 ist an dem Ventilkörper 18 angebracht. Das Dichtelement 68 kann in der, insbesondere vollständig, umlaufenden Nut des Ventilkörpers 18 angebracht sein. Das Dichtelement 68 kann sich in Radialrichtung nur zu einem Teil innerhalb der Nut befinden.

Die Ventilvorrichtung, insbesondere Magnetventilvorrichtung, umfasst zumindest einem Ventilsitz 14 und zumindest eine Betätigungseinheit 16, die zumindest einen Ventilkörper 18 und zumindest ein Betätigungselement 20 aufweist, das zu einer Übertragung einer Betätigungskraft auf den Ventilkörper 18 vorgesehen ist. Gemäß dem weiteren Aspekt ist die Ventilvorrichtung dadurch gekennzeichnet, dass der Ventilkörper 18 eine Nut aufweist und dass ein Dichtelement 68 zumindest zu einem Teil innerhalb der Nut angeordnet ist, wobei die Nut im Querschnitt eine Trapezform aufweist. Die Öffnung, bzw. die Breite der Nut in radialer Richtung nimmt zu. Die Nut ist im Querschnitt trapezförmig ausgebildet. Der Nutgrund ist im Wesentlichen parallel zur Längsachse der Ventilvorrichtung 10 ausgebildet. Zumindest eine der Nutwände verläuft schräg zu dem Nutgrund. Der Winkel zwischen Nutgrund und Nutwänden ist zwischen 90 Grad und 150 Grad, vorzugsweise 100 bis 150 Grad, ausgebildet. Das Dichtelement 68 liegt im montierten Zustand an dem Nutgrund sowie den beiden Nutwänden an. Durch die schräge Ausbildung der Nutwände sind Belastungsspitzen geringer. Das Dichtelement 68 drückt sich durch die schräge Ausbildung der Nutwände nicht auf die am radial äußeren Ende ausgebildete umlaufende Kante der Ventilkörpers 18 ab.

Gemäß einem weiteren Aspekt weisen die Nutwände einen schräg gegenüber dem Nutgrund verlaufenden Teil und Radial weiter außen einen Senkrecht zu dem Nutgrund verlaufenden Teil auf. Die Nutwände weisen eine Abwinklung auf.

Gemäß einem weiteren Aspekt schließt sich an den Ventilkörper 18 an zumindest einer der Nutwände, insbesondere radial außenliegend, ein parallel zu dem Nutgrund verlaufender Bereich an. Im Anschluss an den Bereich ist der Ventilkörper 18 als Kegelstumpf bzw. als Kegelspitze ausgebildet. Der Kegelstumpf oder die Kegelspitze ist so ausgebildet das dieser in den Ventilsitz 14 eingeführt werden kann. Das Dichtelement 68 ist dazu vorgesehen, einen dichten Sitz des Ventilkörpers 18 in dem Ventilsitz 14 zu ermöglichen.

Das Dichtelement 68 kann insbesondere als Dichtring mit einem elliptischen Querschnitt ausgebildet sein. Zur Montage des Dichtelements 68 wird dieses auf gedehnt.

Die zuvor gezeigten weiteren Aspekte können in Bezug auf Dichtelement 68 und die im Wesentlichen umlaufende Nut entsprechend auf alle im Rahmen dieser Anmeldung beschriebenen Ausgestaltung der Ventilkörper 18 übertragen werden.

## Patentansprüche

1. Ventilvorrichtung, insbesondere Magnetventilvorrichtung, mit zumindest einem Durchströmbereich (12), mit zumindest einem Ventilsitz (14) und mit einer Betätigungseinheit (16), die zumindest einen Ventilkörper (18), zumindest ein Betätigungselement (20), das zu einer Übertragung einer Betätigungskraft auf den Ventilkörper (18) vorgesehen ist, und zumindest eine außerhalb eines Fluidkontaktbereichs (22) des Betätigungselements (20) angeordnete erste Entlüftungsöffnung (24) aufweist, wobei die Betätigungseinheit (16) zumindest eine außerhalb des Fluidkontaktbereichs (22) des Betätigungselements (20) angeordnete zweite Entlüftungsöffnung (26) aufweist, wobei der Ventilkörper (18) die zweite Entlüftungsöffnung (26) aufweist, wobei das Betätigungselement eine dritte Entlüftungsöffnung (28) aufweist, wobei die dritte Entlüftungsöffnung (28) außerhalb des Fluidkontaktbereichs (22) des Betätigungselements (20) angeordnet ist,
**dadurch gekennzeichnet, dass** das Betätigungselement (20) in einen Aufnahmebereich (88) des Ventilkörpers (18) eingeschoben ist.

2. Ventilvorrichtung nach dem vorhergehenden Anspruch, **dadurch gekennzeichnet, dass** die Betätigungseinheit (16) zumindest einen Kanal (30) aufweist, der zumindest zwei der Entlüftungsöffnungen (24, 26, 28) miteinander verbindet.

3. Ventilvorrichtung nach einem der vorhergehenden Ansprüche, **dadurch gekennzeichnet, dass** das Betätigungselement (20) zumindest im Wesentlichen rohrförmig ausgebildet ist.

4. Ventilvorrichtung nach einem der vorhergehenden Ansprüche, **dadurch gekennzeichnet, dass** das Betätigungselement (20) zumindest teilweise aus Kunststoff ausgebildet ist.

5. Ventilvorrichtung nach einem der vorhergehenden Ansprüche, **dadurch gekennzeichnet, dass** das Betätigungselement (20) stoffschlüssig mit dem Ventilkörper (18) verbunden ist.

6. Ventilvorrichtung nach einem der vorhergehenden Ansprüche, **dadurch gekennzeichnet, dass** eine Öffnungsrichtung (32, 34, 36) zumindest einer der Entlüftungsöffnungen (24, 26, 28) winklig zu einer Längsrichtung (37) des Betätigungselements (20) ausgerichtet ist.

7. Ventil, insbesondere Magnetventil, mit zumindest einer Ventilvorrichtung (10) nach einem der vorhergehenden Ansprüche.

## Claims

1. Valve device, in particular magnetic valve device, having at least one throughflow region (12), having at least one valve seat (14), and having an actuation unit (16) which has at least one valve body (18), has at least one actuation element (20), which is provided for transmitting an actuation force to the valve body (18), and has at least one first venting opening (24), which is arranged outside a fluid contact region (22) of the actuation element (20), wherein the actuation unit (16) has at least second venting opening (26), which is arranged outside the fluid contact region (22) of the actuation element (20), wherein the valve body (18) has the second venting opening (26), wherein the actuation element has a third venting opening (28), wherein the third venting opening (28) is arranged outside the fluid contact region (22) of the actuation element (20),
**characterized in that** the actuation element (20) has been inserted into a receiving region (88) of the valve body (18).

2. Valve device according to the preceding claim, **characterized in that** the actuation unit (16) has at least one duct (30), which connects at least two of the venting openings (24, 26, 28) to one another.

3. Valve device according to either of the preceding claims, **characterized in that** the actuation element (20) is of at least substantially tubular form.

4. Valve device according to one of the preceding claims, **characterized in that** the actuation element (20) is at least partially formed from plastic.

5. Valve device according to one of the preceding claims, **characterized in that** the actuation element (20) is connected in a materially bonded manner to the valve body (18).

6. Valve device according to one of the preceding claims, **characterized in that** an opening direction (32, 34, 36) of at least one of the venting openings (24, 26, 28) is oriented at an angle to a longitudinal direction (37) of the actuation element (20) .

7. Valve, in particular magnetic valve, having at least one valve device (10) according to one of the preceding claims.

## Revendications

1. Dispositif de soupape, en particulier dispositif de soupape magnétique, comprenant au moins une région d'écoulement (12) avec au moins un siège de soupape (14) et une unité d'actionnement (16) qui présente au moins un corps de soupape (18), au moins un élément d'actionnement (20) qui est prévu pour transférer une force d'actionnement au corps de soupape (18) et au moins une première ouverture de désaérage (24) disposée à l'extérieur d'une région de contact de fluide (22) de l'élément d'actionnement (20), l'unité d'actionnement (16) présentant au moins une deuxième ouverture de désaérage (26) disposée à l'extérieur de la région de contact de fluide (22) de l'élément d'actionnement (20), le corps de soupape (18) présentant la deuxième ouverture de désaérage (26), l'élément d'actionnement présentant une troisième ouverture de désaérage (28), la troisième ouverture de désaérage (28) étant disposée à l'extérieur de la région de contact de fluide (22) de l'élément d'actionnement (20), **caractérisé en ce que** l'élément d'actionnement (20) est enfoncé dans une région de réception (88) du corps de soupape (18).

2. Dispositif de soupape selon la revendication précédente, **caractérisé en ce que** l'unité d'actionnement (16) présente au moins un canal (30) qui relie l'une à l'autre les au moins deux ouvertures de désaérage (24, 26, 28).

3. Dispositif de soupape selon l'une quelconque des revendications précédentes, **caractérisé en ce que** l'élément d'actionnement (20) est réalisé au moins essentiellement sous forme tubulaire.

4. Dispositif de soupape selon l'une quelconque des revendications précédentes, **caractérisé en ce que** l'élément d'actionnement (20) est réalisé au moins en partie en plastique.

5. Dispositif de soupape selon l'une quelconque des revendications précédentes, **caractérisé en ce que** l'élément d'actionnement (20) est connecté par liaison de matière au corps de soupape (18).

6. Dispositif de soupape selon l'une quelconque des revendications précédentes, **caractérisé en ce qu'**une direction d'ouverture (32, 34, 36) d'au moins l'une des ouvertures de désaérage (24, 26, 28) est orientée suivant un certain angle par rapport à une direction longitudinale (37) de l'élément d'actionnement (20).

7. Soupape, en particulier soupape magnétique, comprenant au moins un dispositif de soupape (10) selon l'une quelconque des revendications précédentes.
